# EUROPEAN PATENT APPLICATION

(11) **EP 1 528 398 A1**
(43) Date of publication of application: **04.05.2005**
(21) Application number: 04014474.3
(22) Date of filing: 21.06.2004
(51) Int. Cl.: G01P 3/44, F16J 15/32

(54) **Monitoring device for the angular speed of a roller contact bearing**

(30) Priority: 01.11.2003 IT TO20030869
(71) Applicant: Aktiebolaget SKF, S 415 50 Göteborg (SE)
(72) Inventor: Montagnoni, Raffaele, 10064 Pinerolo (TO) (IT); Ciscato, Barbara, 10062 Luserna San. Giovanni (TO) (IT); Vignotto, Angelo, 10134 Torino (IT)
(74) Representative: Lotti, Giorgio

(57) **Abstract**

Monitoring device (1) for the angular speed of a rolling contact bearing (2) which is provided with a support shield (7) which is mounted in an annular cavity (5) which is defined by a first and second race (3, 4) of the rolling contact bearing (2) and which is mounted in integral fashion with the first race (3) of the rolling contact bearing 82) itself; also being provided with an encoder (8) which is integral with the support shield (7); and with a monitoring sensor (9) which is arranged outside the rolling contact bearing (2) in a posi tion which axially faces the encoder (8); a protection and sealing unit (10) being arranged in such a way as to hermetically seal the cavity (5) and to protect the encoder (8) and which presents a support cover (11) for the sensor (9) which is integral with the sensor (9) itself and which is mounted onto the second race (4), and a sealing element (12) which is interposed between the cover (11) and a sliding surface (13) which is angularly integral with the encoder (8)

## Description

The present invention relates to a monitoring device for the angular speed of a rolling contact bearing.

In general, well-known monitoring devices for the angular speed of a rolling contact bearing comprise:
- a support shield which is mounted in an annular cavity which is defined by two races of the rolling contact bearing and in an integral fashion with a rotating race of the rolling contact bearing itself:

- an encoder which is integral with the support shield; and
- a monitoring sensor which is arranged outside the rolling contact bearing in a position which is axially facing the encoder.

Usually, with the aim of preventing any contamination from entering inside the rolling contact bearing, a sealing device is also associated with the above-mentioned kind of monitoring device, and which comprises:
- a sealing shield which is mounted between the two races of the rolling contact bearing in integral fashion with a non-rotating race of the rolling contact bearing and which is arranged facing the support shield in an axially internal position to the support shield itself:

- a sealing lip which extends between the sealing shield and the support shield: and
- a cover which is arranged in such a way as to close the annular cavity and which is interposed between the encoder and the shield.

The presence of a monitoring device and of a sealing device renders the overall cost of the rolling contact bearings relatively high both from the point of view of the components used and from the point of view of the mechanical working necessary. Furthermore, such a presence is also the source of several technical disadvantages, and disadvantages related to the manufacturing process as well as to utilisation. In fact, due to the extremely narrow working tolerances, the operation of ensuring reciprocal positioning between the sensor and the cover is very delicate, and it is also quite complex to guarantee an optimal exploitation of the internal cavity, both from the point of view of the space available and from the point of view of, however, limiting the external dimensions of the rolling contact bearing.

From the point of view of the manufacturing process, instead, it may easily be argued that the increase in the number of construction elements contributes to increase both the manufacturing time and the probability of errors occurring concerning the reciprocal positioning. While, as far as utilisation is concerned, it is necessary to assemble in relation to each other two elements which are of an extremely different nature from each other, which means that the exploitation of the performance of both devices is far from optimal and that the useful life cycle of the rolling contact bearing is reduced.

The aim of the present invention is to produce a monitoring device for the angular speed of a rolling contact bearing, which will be able to resolve the disadvantages described above in a simple and cost-effective manner.

According to the present invention, a monitoring device for the angular speed of a rolling contact bearing will be produced, comprising:
- a support shield which is mounted in an annular cavity which is defined by a first and second race of the rolling contact bearing and which is mounted in integral fashion to the first race of the rolling contact bearing itself;
- an encoder which is integral with the support shield; and
- a monitoring sensor which is arranged outside the rolling contact bearing in a position which axially faces the encoder;
the device being characterised by the fact that it comprises protection and sealing means which are arranged in such a way as to hermetically seal the said cavity and in such a way as to protect the encoder and comprising a support cover for the sensor which is integral with the sensor itself and which is mounted onto the second race, and a sealing element which is interposed between the cover and a sliding surface which is angularly integral with the encoder.

The present invention will now be described with reference to the attached drawings, which illustrate a non-limiting embodiment of the present invention, and in which:
- FIGURE 1 illustrates, in axial section, a preferred form of embodiment of the monitoring device according to the present invention; and
- FIGURE 2 illustrates, on an enlarged scale, a detail of the device shown in FIGURE 1.

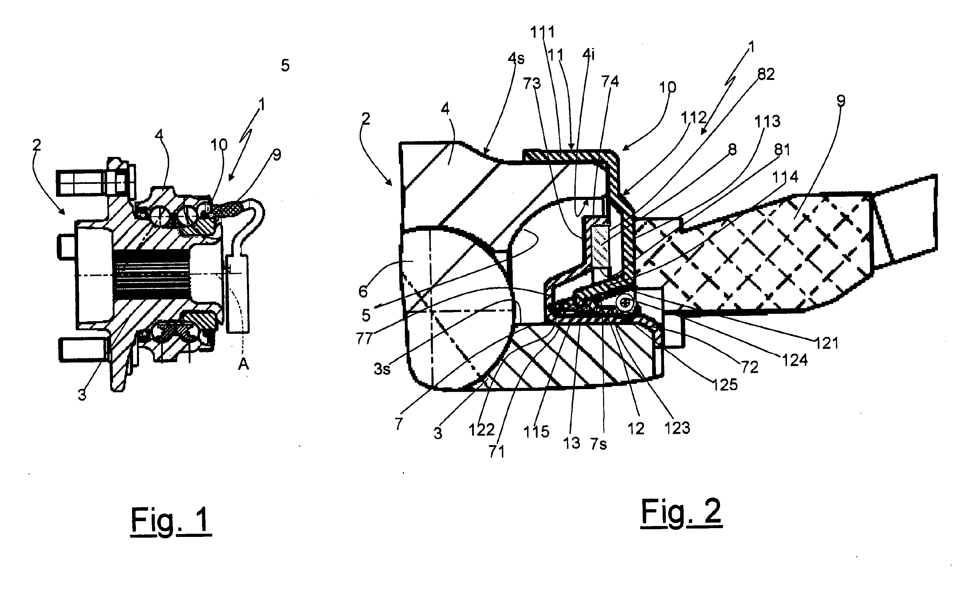

With reference to FIGURE 1, the number 1 indicates a monitoring device, in its entirety, for the angular speed of a rolling contact bearing 2.

The rolling contact bearing 2 comprises an inner race 3 which can rotate around a rotation axis A, and an outer race 4 which is mounted coaxial to the inner race 3 in order to define with the inner race 3 itself an annular cavity 5, which, on one side, is closed by a row 6 of spheres, and, on the other side, is axially open towards the outside.

As is better illustrated in FIGURE 2, the device 1 is mounted onto the rolling contact bearing 2 in such a way as to hermetically seal the cavity 5,, and it comprises a support shield 7 which is mounted onto the inner race 3, an encoder 8 which is integral with the shield 7, and a monitoring sensor 9 which is arranged on the outside of the rolling contact bearing 2 in a position which axially faces the encoder 8.

Finally, the device 1 comprises a protection and sealing unit 10, which is arranged in such a way as to hermetically seal the cavity 5 and to protect the encoder 8, and which comprises, in its turn, a support cover 11 for the sensor 9 which is integral with the sensor 9 itself and which is mounted onto the outer race 4, and a sealing element 12 which is interposed between the cover 11 and a sliding surface 13 which is angularly integral with the encoder 8.

The support shield 7 comprises a cylindrical assembly wall 71, which is shrink-fit onto an external cylindrical surface 3s of the inner race 3, and which is provided with an annular projection 72 which serves to axially block the shield 7 itself onto the inner race 3. Furthermore, the shield 7 comprises an annular wall 73, which is integral with and transverse to the wall 71, and which is provided, in its turn, with a respective peripheral cylindrical projection 74 which is orientated towards the outside of the rolling contact bearing 2 in order to radially block the encoder 8.

Furthermore, the annular wall 73 presents, an annular housing 75, which is axially open towards the outside of the rolling contact bearing 2, and which is radially delimited, towards the inside, by the cylindrical wall 71, and, towards the outside, by a weathered portion 76 of the annular wall 73 itself. Finally, the housing 75 is axially delimited towards the inside by an annular portion 77 which is still a part of the annular wall 73.

The encoder 8 abuts the annular wall 73 and, as has already been stated above, is blocked and radially delimited towards the outside by the projection 74. Furthermore, the encoder 8 is radially delimited towards the inside by a cylindrical internal surface 81 which faces the housing 75 in correspondence with the weathered portion 76, and is axially delimited towards the outside of the rolling contact bearing 2 by an annular surface 82, which is arranged transverse to the axis A and the internal surface 81, and which, furthermore, is arranged alongside the projection 74.

The support cover 11 is made of metallic material, and connected to the sensor 9 by means of cold glueing, or by means of hot co-moulding, or by means of mechanical fixing.

The cover 11 comprises a cylindrical wall 111 and a shaped annular wall 112, which is integral with and transverse to the wall 111, and is provided, at least in correspondence with the sensor 9, with an axial projection 113 which extends towards the outside of the rolling contact bearing 2. The cylindrical wall 111 is shrink-fit onto the outer race 4, and, in particular, and as is illustrated in the attached drawings, it is shrink-fit onto an external cylindrical surface 4s of the outer race 4 in such a way that the annular wall 112 is arrange in such a way as to axially abut the outer race 4 itself.

According to a form of embodiment which is not illustrated, but which is easily understandable in the light of what has been described above, the cylindrical wall 111 may also be shrink-fit onto an internal cylindrical surface 4i of the outer race 4.

The annular wall 112 is provided with a conical portion 114, which re-enters towards the inside of the rolling contact bearing 2, and which presents its own free end 115 which is substantially arranged inside the housing 75.

The sealing element 12 is hot co-moulded onto the cover 11, and is arranged either in total contact with the shield 7, or also in contact with the external cylindrical surface 3s of the inner race 3 according to whether the cylindrical wall 71 extends axially or not along the whole length of the cylindrical surface 3s.

In the case illustrated in which, however, the shield 7 completely covers the cylindrical surface 3s, the sliding surface 13 is defined by a surface 7s of the shield 7 which extends along the whole of the cylindrical wall 71 and also along the annular portion 77. While, in the case which is not illustrated, instead, the shield 7 partially covers the cylindrical surface 3s, the sliding surface 13 is defined by the same cylindrical surface 3s and also by a portion of the surface 7s which is substantially equal to the annular portion 77.

The sealing element 12 comprises a covering layer 121 of the annular portion 77 which faces the cylindrical wall 71, and two sealing lips 122 and 123 which are made of rubber material, and which axially extend opposite in relation to each other and starting from the free end 115.

In particular, the lip 122 extends towards the annular portion 77 in order to create an axial sliding seal with the annular portion 77 itself, while the lip 123 extends towards the cylindrical wall 71 in order to create a radial sliding seal with the cylindrical wall 77 itself.

Furthermore, the sealing element 12 comprises an annular spring 124, which is mounted in correspondence with a free end 125 of the lip 123 in order to increase the friction of the lip 124 in relation to the surface 13 of the cylindrical wall 77.

It should, however, be clear that the sealing element 12 may present a different kind of geometry in relation to that which has been described above, and could also be supplied with a single lip, in such a way as to create different types of radial and axial seals on the aforementioned sliding surface.

In accordance with the above description it is clear that the utilisation of the protection and sealing unit 10 results in saving at least one construction element, such as, for example, a sealing shield which is similar to the shield 7, and that such utilisation also permits to embody in the monitoring device 1 for the angular speed of the rolling contact bearing 2 all of the typical functions of a sealing device which are relevant to its original monitoring functions. Furthermore, the creation of the cover 11, both together with the sensor 9 and with the sealing element 12 means that it is possible to create an element which is perfectly compatible both with the rolling contact bearing 2 on which it is mounted, as well as with the support shield 7 for the encoder 8 with which it is associated.

It is intended that the present invention should not be limited to the forms of embodiment herein described and illustrated, which are to be considered as examples of forms of embodiment relating to al a protection device for an encoder in a rolling contact baring, and which might, instead, be subject to further modifications relating to the shape and disposition of the parts, as well as to details pertaining to construction and assembly.

## Claims

1. Monitoring device (1) for the angular speed of a rolling contact bearing (2) comprising:
- a support shield (7) which is mounted in an annular cavity (5) which is defined by a first and second race (3, 4) of the rolling contact bearing (2) and which is mounted in integral fashion to the first race (3) of the rolling contact bearing (2) itself;
- an encoder (8) which is integral with the support shield (7); and
- a monitoring sensor (9) which is arranged outside the rolling contact bearing (2) in a position which axially faces the encoder (8); the device (1) being **characterised by** the fact that it comprises protection and sealing means which are arranged in such a way as to hermetically seal the said cavity (5) and in such a way as to protect the encoder (8) and comprising a support cover (11) for the sensor (9) which is integral with the sensor (9) itself and which is mounted onto the second race (4), and a sealing element (12) which is interposed between the cover (11) and a sliding surface (13) which is angularly integral with the encoder (8).

2. Monitoring device according to Claim 1, **characterised by** the fact that the said protection cover (11) is united with the said sensor (9) by means of cold glueing, or by means of hot co-moulding, or by means of mechanical fixing.

3. Monitoring device according to Claims 1 or 2, **characterised by** the fact that the support cover (11) is made of metallic material.

4. Monitoring device according to Claim 3, **characterised by** the fact that the said support cover (11) comprises a shaped cylindrical wall (111) and a shaped annular wall (112) which are provided, at least in correspondence with the sensor (9), with an axial projection (113) which extends towards the outside of the rolling contact bearing (2).

5. Monitoring device, **characterised by** the fact that the said cylindrical wall (111) is shrink-fit onto the second race (4) radially outside the second race 84) itself.

6. Monitoring device, **characterised by** the fact that the said cylindrical wall (111) is shrink-fit onto the second race (4) radially inside the second race (4) itself.

7. Monitoring device according to Claims 4, 5 or 6, **characterised by** the fact that the said sealing device (12) comprises at least one rubber lip (122) (123) which is hot co-moulded onto the said sealing cover (11).

8. Monitoring device according to Claim 7, **characterised by** the fact that the shaped annular wall (112) presents an entering conical portion (114) which enters towards the inside of the rolling contact bearing (2) in order to support the said sealing element (12).

9. Monitoring device according to Claim 8, **characterised by** the fact that the said sealing element (12) comprises two sealing lips (122, 123) which extend axially opposite in relation to each other.

10. Monitoring device according to Claim 9, **characterised by** the fact that one of the said two sealing lips (123) presents an annular elastic element (124) which is suitable for increasing the friction action of the sealing lip (123) on the said sliding surface (13).

11. Monitoring device according to Claim 10, **characterised by** the fact that the said support shield (7) comprises a mounting wall (71) which is shrink-fit onto the said first race (3) and which defines the said sliding surface (13).

12. Monitoring device according to Claims 10 or 11, **characterised by** the fact that the said support shield (7) comprises an annular portion (73) which defines part of the said sliding surface (13).
